# EUROPÄISCHE PATENTSCHRIFT

(11) **EP 0 734 802 B1**
(45) Veröffentlichungstag und Bekanntmachung des Hinweises auf die Patenterteilung: **07.10.1998**
(21) Anmeldenummer: 96250035.1
(22) Anmeldetag: 12.02.1996
(51) Int. Cl.: B23B 5/10, B21B 28/02

(54) **Höheneinstellvorrichtung in einer Kaliberbearbeitungsmaschine für Walzgerüste**
Height adjustment device in a pilgrim roll working machine
Dispositif d'ajustement d'hauteur dans une machine à travailler des laminoirs pilgrim

(30) Priorität: 28.03.1995 DE 19512954
(43) Veröffentlichungstag der Anmeldung: 02.10.1996
(73) Patentinhaber: MANNESMANN Aktiengesellschaft, 40213 Düsseldorf (DE)
(72) Erfinder: Esser, Karl-Josef, Dipl.-Ing., D-41179 Mönchengladbach (DE)
(74) Vertreter: Meissner, Peter E., Dipl.-Ing.

(56) Entgegenhaltungen:
- DE-A- 2 153 374

## Beschreibung

Die Erfindung betrifft eine Höheneinstellvorrichtung in Kombination mit einer Kaliberbearbeitungsmaschinen für Walzgerüste, insbesondere Maß- und Reduzierwalzgerüste, die mit im Gerüst eingebauten Walzen zur Bearbeitung dieser Walzen in die Kaliberbearbeitungsmaschine eingesetzt werden und zwecks Ausrichtung der Bearbeitungsmitte der Kaliberbearbeitungsmaschine zur Gerüstmitte des zu kalibrierenden Walzgerüstes auf vier unterhalb des Gerüstes beidseitig der Gerüstmitte angeordneten, in vertikalen Ebenen verstellangetriebenen Exzentern, mit am Walzgerüst vorgesehenen Bezugsflächen aufliegen, Ein derartiges Walzgerüst ist aus der DE-OS 21 53 374 bekannt.

Bei der Rohrherstellung werden für die Fertigwalzung Streckreduzierwalzwerke, Reduzierwalzwerke oder Maßwalzwerke eingesetzt, wobei man bestrebt ist, den Abstand der einzelnen Walzgerüste so klein wie möglich zu halten. Aus dieser Forderung ist eine scheibenförmige Gerüstform entwickelt worden. Die aus verformungstechnischen Gründen meistens drei unter 120 Grad angeordneten Walzen sind in einem Käfig gelagert und untereinander über Kegelräder verbunden. Eine der Walzenachsen ist verlängert und mit einer Kupplung für den Antrieb versehen. Um eine möglichst genaue Walzkaliberbearbeitung zu erzielen und die Demontage und Montage der Walze zu vermeiden, werden die Walzen im im Gerüst eingebauten Zustand in einer Walzenbearbeitungsmaschine kalibriert. Das Gerüst wird dazu mittels Kran in die Maschine eingesetzt und auf der höhenverstellbaren Auflage abgestellt. Nach dem Ausrichten in horizontaler und vertikaler Richtung wird das Gerüst hydraulisch gespannt und bearbeitet. Für den Bearbeitungsvorgang ist es wichtig, daß das Werkzeug auf die Gerüstmitte ausgerichtet wird, d. h. Gerüstmitte und Bearbeitungswerkzeugmitte müssen mit kleinen Toleranzen übereinstimmen. Da Walsgerüste -außer zu ihrer Mitte- keine Bezugskanten mit den geforderten Toleranzen haben, muß das Gerüst in der Kaliberbearbeitungsmaschine in der X-und Y-Ebene entsprechend den geforderten Toleranzen verstellbar sein.

Normalerweise wird das Gerüst horizontal, auf je zwei Exzenterrollen auf beiden Seiten des Gerüstes aufliegend, eingestellt, wobei die Exzenter jeweils auf Exzenterwellen angeordnet sind. Die Höhenverstellung erfolgt durch synchrones Verdrehen der Exzenterwellen über gekoppelte Schneckengetriebe und zusätzliche Getriebe, sowie außen an der Kaliberbearbeitungsmaschine angesetzte Getriebemotoren. Bei hoher Gesamtübersetzung ist ein relativ genaues Positionieren in vertikaler Richtung gegeben. Die horizontale Einstellung erfolgt über Spindeln, wobei das Gerüst auf Exzenterrollen abrollt.

Das bekannte System bedingt eine sehr hohe Fertigungsgenauigkeit und damit hohe Herstellkosten. Im Gerüst der Kaliberbearbeitungsmaschine müssen Bohrungen für die Schneckenübersetzungen vorgesehen werden, aufwendige Schmierung ist erforderlich, um die Reibung an den Schnecken mindestens teilweise zu vermindern. Die Montage der Einrichtungen ist aufwendig und damit unwirtschaftlich.

Ausgehend von einer Höheneinstellvorrichtung in einer Kaliberbearbeitungsmaschine der gattungsgemäßen Art ist es Aufgabe der vorliegenden Erfindung, die Höheneinstellvorrichtung so zu verbessern, daß sie mit einfachen Mitteln ein Anheben der Walzgerüste weitgehend ohne Reibverluste im Bereich der hohen Kräfte gestattet und daß Selbsthemmung der Antriebe im Bereich geringerer Kräfte herrscht. Dabei sind, bei kostengünstiger Herstellung, geringe Antriebsleistungen anzustreben, um die Gesamtkosten der Kaliberbearbeitungsmaschine zu minimieren.

Zur Lösung der Aufgabe wird erfindungsgemäß an einer Einstellvorrichtung der gattungsgemäßen Art vorgeschlagen, daß jeweils zwei Exzenter jeder Gerüstseite auf gemeinsamen Exzenterwellen angeordnet sind, die parallel zueinander angeordnet nach einer der Gerüstseiten verlängert in jeweils ein Bauteil zum Verdrehen der Exzenterwellen hineinreichen, welche zur gleichzeitigen Verdrehung aller das Walzgerüst einstellender Exzenter über ein gemeinsames horizontal bewegbares Verstellglied synchron verstellbar sind.

Durch diesen Vorschlag vereinfacht sich der Exzenterantrieb wesentlich, die am Ständer der Kaliberbearbeitungsmaschine notwendige Bearbeitung wird auf zwei Bohrungen für die Exzenterwellen reduziert, das Komplettsystem ist vormontierbar und somit einfach zu installieren. Die Teile sind hinsichtlich der Bearbeitung und auch der Konstruktion einfach und damit kostengünstig. Die Verstellung der Exzenter erfolgt synchron bei hoher Einstellgenauigkeit.

In einer Weiterbildung der Erfindung ist vorgesehen, daß jedes Bauteil zum Verdrehen der Exzenterwellen achsparallel exzentrisch zur Mitte der Exzenterwellen angeordnete, mit der Exzenterwelle gekoppelte Kurvenrollen aufweist, durch die beim Abrollen auf - bezogen auf die anderen Bauteile - um gleiche Winkelbeträge geneigten Bahnen, die mittels des gemeinsamen Verstellgliedes relativ zu den Kurvenrollen horizontal bewegbar sind, das Verdrehen der Exzenterwelle erzwingbar ist.

Die auf Schrägen abrollenden Kurvenrollen verhindern das Entstehen des bei ebenen Gleitbahnen auftretenden stick-slip-Effektes und sorgen für günstiges genaues Positionieren bei geringen Antriebsleistungen. Die Schrägen sorgen für eine Übersetzung im System, die Kurvenrollen und Lager sind wälzgelagert und vermindern weiterhin die Antriebsleistung. Durch gemeinsames Verstellen der Bauteile zum Verdrehen der Exzenterwellen ist ein einfaches Synchronisieren der Bauteile herbeiführbar, wobei die Kurvenrollen, die mit den Exzenterwellen gekoppelt sind, an den Schrägen zwangsgeführt, gleichzeitig ein Verdrehen der Exzenterwellen um geringe Winkelbeträge (30 Grad) bewirken.

In einer weiteren Ausgestaltung der Erfindung ist vorgesehen, daß jeweils zwei sich gegenüberliegende Kurvenrollen durch zwei parallel verlaufende Bahnen eines Bauteils zum Verdrehen der Exzenterwelle zwangsgeführt sind, wobei zwischen den Bahnen eine Führungsrolle horizontal geführt ist, die koaxial mit der Exzenterwelle verbunden ist.

Die beiden Bahnen sorgen für die Zwangsführung der Kurvenrollen und verbessern somit die Toleranzen. Bei gleichzeitiger Führung der Exzenterwelle über zwischen den Bahnen angeordnete Führungsrollen wird ein exakt geführtes Sysstem geschaffen, mit dem ein feinfühliges und genaues Einstellen der Höhe des zu bearbeitenden Gerüstes möglich wird.

Nach einem weiteren Merkmal der Erfindung ist vorgesehen, daß die Bauteile zum Verdrehen der Exzenterwellen über eine gemeinsame, die Bahnen horizontal und parallel zu sich selbst verschiebbare Leisten miteinander verbunden sind, die an einem Ende mit einem Linearantrieb bestehend aus Getriebemotor und Untersetzungsgetriebe verbunden ist. Die Kopplung der Systeme untereinander erfolgt nicht mehr wie bisher über Antriebswellen und Getriebeteile, sondern über eine einfache Leiste, die in ihrer Längserstreckungsrichtung verschoben wird.

Vorzugsweise ist der Linearantrieb für die Leiste als gerade Schubkurbel ausgebildet, deren Kurbel mit einer Kurvenrolle in eine Nut am seitlichen Ende der Leiste eingreift. Das gerade Schubkurbelsystem ist für die Verstellung der Leiste besonders geeignet, weil es nicht selbsthemmend ist, eine harmonische Übersetzung aufweist und reversierend betrieben werden kann, ohne daß ein Endschalter erforderlich ist. Der Getriebemotor zum Antrieb der geraden Schubkurbel ist mit hoher Schnecken-und Getriebeuntersetzung selbsthemmend ausgebildet.

Das gesamte System der Gerüstverstellung ist wartungsfrei, separate Schmierungen sind nicht erforderlich, denn alle Elemente sind lebensdauergeschmiert.

Ein Ausführungsbeispiel der Erfindung ist in der Zeichnung dargestellt und wird nachfolgend beschrieben. Es zeigt:
- Fig. 1: Einen Querschnitt durch die Kaliberbearbeitungsmaschine mit Blick auf das eingesetzte Walzgerüst und
- Fig. 2: das Prinzip der Exzenterverstellung nach der Erfindung.

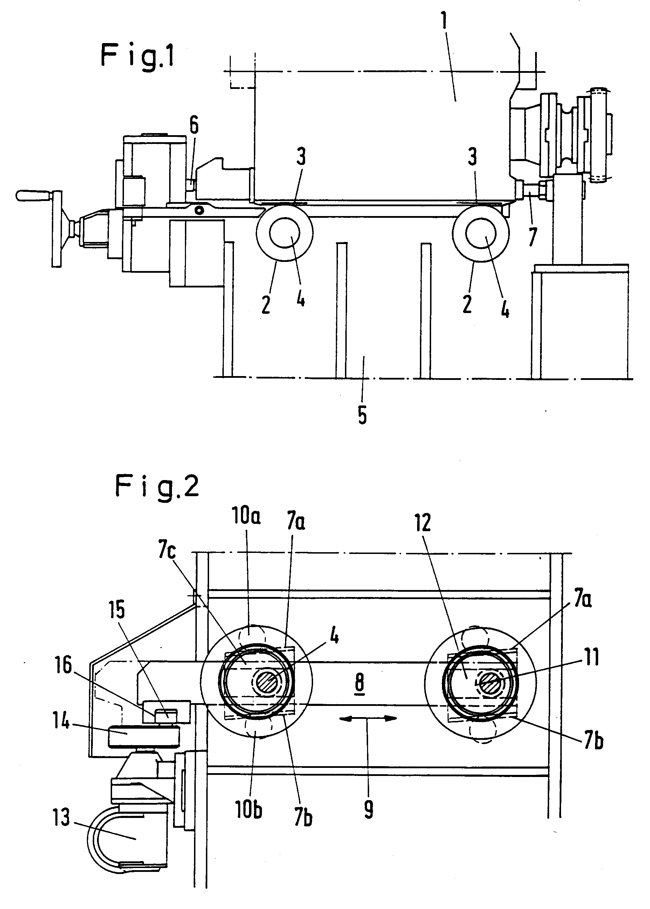

In Figur 1 ist mit 1 das Walzgerüst, beispielsweise ein Streckreduzierwalzgerüst bezeichnet, das auf den Exzentern 2 mit entsprechenden Bezugsflächen 3 aufliegt. Die Exzenter 2 sind auf den Exzenterwellen 4 befestigt und mit diesen verdrehbar. Die Exzenterwellen 4 ihrerseits sind im Ständer 5 der Kaliberbearbeitungsmaschine gelagert. Das Walzgerüst 1 wird bei 6 und 7 in der horizontalen Lage geklemmt, nachdem es, wie nachfolgend beschrieben, in der Höhenlage eingestellt wurde.

Die Exzenterwellen 4 der Exzenter 2 werden, wie in Figur 2 erkennbar, synchron um einen Verdrehwinkel nach oben oder unten verstellt. Dies geschieht mit zwei winklig angeordneten parallelen Bahnen 7a, 7b, die über eine gemeinsame Leiste 8 in Pfeilrichtung 9 verstellbar sind. Die Bahnen 7a, 7b führen zwei eingespannte Kurvenrollen 10a, 10b, die exzentrisch zur Mitte der Exzenterwelle 4 gelagert mit dieser gekoppelt sind. Zur Führung der in dem gemeinsamen Bauteil 7c angeordneten Bahnen 7a, 7b dient eine Führungsrolle 11, die auf der Mitte der Exzenterwelle 4 befindlich, das Teil 7c über die Nut 12 führt. Beide Bauteile 7c, als Einrichtung zum Verdrehen der Exzenterwellen 4 bezeichnet, sind identisch ausgebildet und über die Leiste 8 miteinander verbunden.

Über den Getriebemotor 13 und das Untersetzungsgetriebe 14 wird die Kurvenrolle 15 auf einer geschlossenen Kreisbahn bewegt, wobei die Kurvenrolle 15 in einer Kulisse 16 am Ende der Leiste 8 geführt ist. Dadurch wird die Leiste 8 reviersierend harmonisch bewegt, ohne daß Endschalter für die Linearbewegung der Leiste 8 erforderlich wären. Beim Bewegen der Leiste 8 werden die Bahnen 7a, 7b des Bauteils zum Verdrehen der Exzenterwellen verschoben, wodurch über die Kurvenrollen 10a, 10b eine Verdrehbewegung auf die mit ihnen gekoppelte Exzenterwelle 4 dann erzwungen wird, wenn infolge der Bahnen 7a, 7b die Kurvenrollen 10a, 10b ihre Lage und Richtung verändern.

Die Kurvenrollen 10a, 10b sind, wie die Führungsrolle 11, wälzgelagert und somit von geringem Reibwiderstand. Dadurch können die Antriebe sehr leicht und damit kostengünstig gehalten werden, ohne daß die Genauigkeit der Einstellung der Höhe des Walzgerüstes darunter leidet. Mit dem vorgeschlagenen System läßt sich somit in einfacher und exakter Weise eine Höheneinstellung des Walzgerüstes 1 in dem Ständer 5 der Kaliberbearbeitungsmaschine und damit ein toleranzhaltig genaues Bearbeiten der Walzen des Walzgerüstes vornehmen.

## Patentansprüche

1. Höheneinstellvorrichtung in Kombination mit einer Kaliberbearbeitungsmaschinen für Walzgerüste, insbesondere Maß- und Reduzierwalzgerüste, die mit im Gerüst eingebauten Walzen zur Bearbeitung dieser Walzen in die Kaliberbearbeitungsmaschine eingesetzt werden und zwecks Ausrichtung der Bearbeitungsmitte der Kaliberbearbeitungsmaschine zur Gerüstmitte des zu kalibrierenden Walzgerüstes auf vier unterhalb des Gerüstes beidseitig der Gerüstmitte angeordneten, in vertikalen Ebenen verstellangetriebenen Exzentern, mit am Walzgerüst vorgesehenen Bezugsflächen aufliegen, dadurch gekennzeichnet,
daß jeweils zwei Exzenter (2) jeder Gerüstseite auf gemeinsamen Exzenterwellen (4) angeordnet sind, die parallel zueinander angeordnet nach einer der Gerüstseiten verlängert in jeweils ein Bauteil (7c) zum Verdrehen der Exzenterwellen (4) hineinreichen, welche zur gleichzeitigen Verdrehung aller das Walzgerüst (1) einstellender Exzenter (2) über ein gemeinsames horizontal bewegbares Verstellglied (8) synchron verstellbar sind.

2. Höheneinstellvorrichtung nach Anspruch 1,dadurch gekennzeichnet,
daß jedes Bauteil (7c) zum Verdrehen der Exzenterwellen achsparallel exzentrisch zur Mitte der Exzenterwellen (4) angeordnete, mit der Exzenterwelle (4) gekoppelten Kurvenrollen (10a,10b) aufweist, durch die beim Abrollen auf -bezogen auf die anderen Bauteile (7c)- um gleiche Winkelbeträge geneigten Bahnen (7a,7b), die mittels des gemeinsamen Verstellgliedes (8) relativ zu den Kurvenrollen (10a,10b) horizontal bewegbar sind, das Verdrehen der Exzenterwelle (4) erzwingbar ist.

3. Höheneinstellvorrichtung nach einem der vorstehenden Ansprüche,dadurch gekennzeichnet,
daß jeweils zwei sich gegenüberliegende Kurvenrollen (10a,10b) durch zwei parallel verlaufende Bahnen (7a,7b) eines Bauteils (7c) zum Verdrehen der Exzenterwelle zwangsgeführt sind, wobei zwischen den Bahnen (7a,7b) eine Führungsrolle (11) horizontal geführt ist, die koaxial mit der Exzenterwelle (4) verbunden ist.

4. Höheneinstellvorrichtung nach einem der vorstehenden Ansprüche, dadurch gekennzeichnet,
daß die Einrichtungen (7c) zum Verdrehen der Exzenterwellen über das gemeinsame, die Bahnen (7a,7b) horizontal und parallel zu sich selbst verschiebende, als Leiste ausgebildete Verstellglied (8) miteinander verbunden sind, das an einem Ende mit einem Linearantrieb bestehend aus Getriebemotor (13) und Untersetzungsgetriebe (14) verbunden ist.

5. Höheneinstellvorrichtung nach Anspruch 4, dadurch gekennzeichnet,
daß der Linearantrieb als Geradschubkurbel ausgebildet ist, deren Kurbel mit einer Kurvenrolle (15) in eine Kulisse (16) am seitlichen Ende der Leiste (8) eingreift.

## Claims

1. A height adjustment device in combination with a roll pass dressing machine for roll stands, in particular for sizing and reduction roll stands, which are inserted into the roll pass dressing machine with rolls installed in the stand for dressing these rolls and, for alignment of the dressing centre of the roll pass dressing machine to the centre of the roll stand to be grooved, lie on four eccentrics adjustably driven in vertical planes and located beneath the stand on either side of the centre of the stand with reference surfaces provided on the roll stand,
characterised in that in each case two eccentrics (2) of each side of the
stand are arranged on common eccentric shafts (4) which are arranged parallel to one another and are extended towards one of the sides of the stand and extend into one component (7c) each for turning the eccentric shafts (4), which are synchronously adjustable for simultaneous turning of all the eccentrics (2) adjusting the roll stand (1) by means of a common horizontally movable adjustment element (8).

2. A height adjustment device according to Claim 1, characterised in that each component (7c) for turning the eccentric shafts has cam rollers (10a, 10c) arranged paraxially eccentrically to the centre of the eccentric shafts (4) and coupled to the eccentric shaft (4), by means of which rollers upon rolling on tracks (7a, 7b) inclined - relative to the other components (7c) - by the same angular amounts, which tracks are horizontally movable by means of the common adjustment element (8) relative to the cam rollers (10a, 10b), the turning of the eccentric shaft (4) can be brought about.

3. A height adjustment device according to one of the above claims, characterised in that in each case two opposing cam rollers (10a, 10b) are guided in restrained manner by two tracks (7a, 7b), running in parallel, of a component (7c) for turning the eccentric shaft, with a guide roll (11) being guided horizontally between the tracks (7a, 7b), which roll is connected coaxially to the eccentric shaft (4).

4. A height adjustment device according to one of the above claims, characterised in that the means (7c) for turning the eccentric shafts are connected together by means of the common adjustment element (8), designed as a bar, which displaces the tracks (7a, 7b) horizontally and parallel to itself, which element is connected at one end to a linear drive consisting of a gear motor (13) and a step-down gear (14).

5. A height adjustment device according to Claim 4, characterized in that the linear drive is designed as a slider crank, the crank of which engages with a cam roll (15) in a slotted link (16) at the lateral end of the bar (8).

## Revendications

1. Dispositif de réglage en hauteur en combinaison avec une machine à canneler pour des cages de laminoir, en particulier des cages de laminoirs réducteurs et de précision, qui sont utilisées avec des cylindres montés dans la cage pour traiter ces cylindres dans la machine à canneler et, en vue de l'alignement du centre de traitement de la machine à canneler par rapport au centre de la cage de laminoir à calibrer, reposent sur quatre excentriques agencés au-dessous de la cage dès deux côtés du centre de la cage et entraînés en réglage dans des plans verticaux, par des surfaces de référence prévues sur la cage de laminoir,
caractérisé en ce que, à chaque fois, deux excentriques (2) de chaque coté de la cage sont agencés sur des arbres d'excentrique communs (4), qui, en étant agencés parallèlement l'un à l'autre, et en étant prolongés suivant un des côtés de la cage, pénètrent, à chaque fois, dans une pièce (7c) pour faire tourner les arbres d'excentrique (4), lesquels peuvent être réglés de façon synchrone pour la rotation simultanée de tous les excentriques (2) réglant la cage de laminoir (1) par l'intermédiaire d'un organe de réglage commun (8) horizontalement déplacable.

2. Dispositif de réglage en hauteur selon la revendication 1, caractérisé en ce que chaque pièce (7c) présente, pour faire tourner les arbres d'excentrique, des galets de came (10a, 10b) agencés parallèlement à l'axe de façon excentrique par rapport au centre des arbres d'excentrique (4) et coupés à l'arbre d'excentrique (4), grâce auxquels la rotation de l'arbre d'excentrique (4) peut être forcée lors du roulage sur des voies (7a,7b) inclinées suivant de mêmes valeurs angulaires, relativement aux autres pièces (7c), voies qui peuvent être déplacées horizontalement, au moyen de l'organe de réglage commun (8), relativement aux galets de came (10a,10b).

3. Dispositif de réglage en hauteur selon une des revendications précédentes,
caractérisé en ce que, à chaque fois, deux galets de came opposés (10a,10b) sont guidés de façon forcée par deux voies (7a,7b), s'étendant parallèlement, d'une pièce (7c) pour faire tourner l'arbre d'excentrique, un rouleau de guidage (11) étant guidé horizontalement entre les voies (7a,7b), lequel rouleau est relié coaxialement à l'arbre d'excentrique (4).

4. Dispositif de réglage en hauteur selon une des revendications précédentes,
caractérisé en ce que les dispositifs (7c) pour faire tourner les arbres d'excentrique sont reliés ensemble par l'intermédiaire de l'organe de réglage commun (8), réalisé comme baguette, et déplacant horizontalement et parallèlement à elles-mêmes les voies (7a,7b), lequel organe est relié, à une extrémité, à un entraînement linéaire constitué d'un électroréducteur (13) et d'une transmission de démultiplication (14).

5. Dispositif de réglage en hauteur selon la revendication 4, caractérisé en ce que l'entraînement linéaire est réalisé comme mécanisme bielle-manivelle, dont la manivelle s'engage avec un galet de came (15) dans un coulisseau (16) sur l'extrémité latérale de la baguette (8).
